# EUROPÄISCHE PATENTSCHRIFT

(11) **EP 4 252 429 B1**
(45) Veröffentlichungstag und Bekanntmachung des Hinweises auf die Patenterteilung: **20.11.2024**
(21) Anmeldenummer: 21778237.4
(22) Anmeldetag: 21.09.2021
(51) Int. Cl.: H04R 1/02, H04R 1/06

(54) **LAUTSPRECHERSYSTEM**
LOUDSPEAKER SYSTEM
SYSTÈME DE HAUT-PARLEUR

(30) Priorität: 24.11.2020 DE 102020131094
(43) Veröffentlichungstag der Anmeldung: 04.10.2023
(73) Patentinhaber: BXM Development B.V., 5451 HA Mill (NL)
(72) Erfinder: GERICHHAUSEN, Dave, 5451 HA Mill (NL)
(74) Vertreter: Castell, Klaus
(86) Internationale Anmeldenummer: PCT/IB2021/058570
(87) Internationale Veröffentlichungsnummer: WO 2022/112870

(56) Entgegenhaltungen:
- EP-A1- 3 473 496
- JP-U- S4 847 331
- US-A- 4 852 178

## Beschreibung

Die Erfindung betrifft ein Lautsprechersystem, aufweisend mindestens eine Lautsprechereinheit, mindestens eine Montagevorrichtung, wobei die mindestens eine Lautsprechereinheit mit der mindestens einen Montagevorrichtung verbindbar ist. Zum Einbau von Lautsprechern in Möbel, in Kraftfahrzeuge oder in feste Inneneinrichtungen ist es bekannt, Ausnehmungen in Oberflächen einzubringen, die an das zu verbauende Lautsprechersystem angepasst sind. Im Kraftfahrzeugbau ist es üblich, für Lautsprechersysteme vorgefertigte Ausnehmungen in der Türinnenverkleidung vorzusehen oder auch in anderen Einzelteilen der Fahrzeuginneneinrichtung. Einige Fahrzeughersteller sehen dafür eigene Lautsprechersysteme vor, die in die vorgefertigten Standardöffnungen eingebaut werden können. Dabei unterscheiden sich die Einbauöffnungen verschiedener Hersteller. Eine länderübergreifende Norm für Öffnungen zum Einbau von Lautsprechersystemen gibt es nicht.

In Kraftfahrzeugen ist der Einbau von Lautsprechern häufig durch den vorhandenen Kabelbaum vorbereitet. In einem Kraftfahrzeug-Kabelbaum können über einhundert verschiedene Steck- und Kopplungspunkte vorhanden sein. JP S48 47331 U zeigt ein Lautsprechersystem entsprechend des einleitenden Teils von Anspruch 1. EP 3 473 496 A1 zeigt ein Lautsprechersystem mit integral außen am Korb geformten Anschluss. US 4 852 178 A zeigt Details zur Befestigung eines Lautsprechersystems in einer Einbausituation in einem Kraftfahrzeug.

Aufgabe der Erfindung ist es daher, ein Lautsprechersystem zur Verfügung zu stellen, das eine hohe Variabilität und Flexibilität beim Einbau aufweist.

Die der Erfindung zugrunde liegende Aufgabe wird erfüllt durch ein Lautsprechersystem mit den Merkmalen nach Anspruch 1. Weitere vorteilhafte Ausgestaltungen sind in den Unteransprüchen zu Anspruch 1 angegeben.

Nach der Erfindung ist also vorgesehen, dass das Lautsprechersystem aus verschiedenen Einzelteilen besteht. Dabei weist das Lautsprechersystem mindestens eine Lautsprechereinheit und mindestens eine Montagevorrichtung auf, wobei die mindestens eine Lautsprechereinheit mit der mindestens einen Montagevorrichtung verbindbar ist. Hierzu ist es möglich, dass die Montagevorrichtung als Montagerahmen für eine Mehrzahl an Lautsprechern aufgebaut ist. Es ist auch möglich, dass in einen Montagerahmen mehrere Lautsprecher, die als eine Lautsprechereinheit zusammengefasst sind, wie ein Mitteltöner und ein Hochtöner, und die konzentrisch übereinander angeordnet sind, in einem Montagerahmen aufgenommen sind. Dabei ist nach dem Gedanken der Erfindung vorgesehen, dass die mindestens eine Montagevorrichtung als Überwurf ausgestaltet ist, der zur Innenseite mindestens zwei Senknuten aufweist, welche mit Vorsprüngen an der Außenseite der mindestens einen Lautsprechereinheit korrespondieren, wenn der Überwurf die mindestens eine Lautsprechereinheit aufnimmt. In dem Überwurf weisen die mindestens zwei Senknuten jeweils etwa mittig einen tangentialen Versatz auf, wobei im Weg des tangentialen Versatzes ein Riegelvorsprung vorhanden ist, welcher den Vorsprüngen an der Außenseite der mindestens einen Lautsprechereinheit einen Klemmsitz verleiht. Die Lautsprechereinheit, die aus einem einzigen Lautsprecher bestehen kann oder auch mehr als einen Lautsprecher umfassen kann, weist bei einem kreisförmigen Aufbau des Lautsprechers am äußeren Umfang zwei Federn, im Sinne einer Nut-und-Federverbindung, oder einzelne Vorsprünge auf, welche in die Senknuten des Überwurfs eingreifen. Innerhalb der Senknut im Überwurf ist in der Ebene des Überwurfs ein Versatz vorhanden. Die Feder am äußeren Umfang der Lautsprechereinheit kann in der Senknut durch Verdrehen um die eigene Achse innerhalb der Senknut verriegelt werden. Insofern ähnelt das Einsetzen der mindestens einen Lautsprechereinheit in den Überwurf einem Bajonett-Verschluss. Tatsächlich aber ist es nicht identisch mit einem Bajonett-Verschluss, weil keine Spannfeder vorhanden ist, welche den Einsatz in der Kulisse des Bajonett-Verschlusses festhält.

In einer ersten Ausgestaltung des erfindungsgemäßen Lautsprechersystems ist vorgesehen, dass die mindestens eine Lautsprechereinheit und die mindestens eine Montagevorrichtung im Bereich des Überwurfs kreisrund ausgeführt sind. Durch die kreisrunde Ausführungsform ist es möglich, den Lautsprecher innerhalb der Montagevorrichtung durch Verdrehen zu fixieren. Alternativ ist es auch möglich, den Überwurf und den Lautsprecher rechteckig auszuführen. Zum Verriegeln kann dann die Lautsprechereinheit innerhalb des Überwurfs verschoben statt verdreht werden und zwar so weit, wie es der Versatz in der Senknut es zulässt.

In Ausgestaltung der Erfindung kann es vorgesehen sein, dass die mindestens eine Montagevorrichtung mit der mindestens einen Lautsprechereinheit vorwärts als auch rückwärts verbindbar ist. Die Lautsprechereinheit kann also von vorn in den Überwurf eingesenkt werden, wobei "vorne" die Seite der Lautsprechereinheit ist, zu der der Zuhörer gewandt ist. Alternativ ist es auch möglich, dass der Überwurf von hinten über den Umfang der Lautsprechereinheit geworfen wird, wobei "hinten" die Seite der Lautsprechereinheit ist, die beim bestimmungsgemä-βen Gebrauch der Lautsprechereinheit vom Zuhörer abgewandt ist.

Der tangentiale Versatz in der Senknut kann in Ausgestaltung der Erfindung so lang sein, dass die Vorsprünge an der Außenseite der mindestens einen Lautsprechereinheit beim Eingriff in den Überwurf über den Riegelvorsprung hinweg bewegbar sind. Dadurch wird der Klemmsitz wieder aufgehoben und die Feder oder Vorsprung an der Lautsprechereinheit sind in dem Versatz gefangen.

Durch die Art des Aufbaus des gesamten Lautsprechersystems ist es möglich, einen Lausprecher, der in der Produktion höhere Kosten verursacht als Montageteile, mit verschiedenen Montagelementen zu kombinieren. So kann ein Montageeinsatz beispielsweise pro Fahrzeugfabrikat erstellt werden und mit standardisierten Lautsprechereinheiten kombiniert werden. Dabei kann die Qualität der Lautsprechereinheiten ebenso variieren. Es können sehr hochwertige Lautsprechereinheiten mit einem sehr reinen Klang verbaut werden, aber auch Lautsprechereinheiten mit einem weniger hochwertigen Klang und damit einhergehend meist geringeren Kosten.

Die einzubauenden Lautsprechersysteme müssen aber nicht nur unterschiedlichen Einbaurahmen und -positionen genügen, sondern auch unterschiedlichen elektrischen Einbaubedingungen. Da in Kraftfahrzeug-Kabelbäumen nicht selten mehr als 100 verschiedene Endpunkte mit Steckverbindern vorhanden sind, die bewusst eine unterschiedliche Form aufweisen, ist es zwischen verschiedenen Kraftfahrzeug-Modellen oder verschiedenen Kraftfahrzeug-Marken nicht unüblich, dass jeder Lautsprecher einen sehr individuellen, elektrischen Steckkontakt-Typ aufweist. Das Variieren der Form der Steck-Kontakte wird deswegen unternommen, um eine Eindeutigkeit der Kabelbelegung zu erreichen. Aufgrund der Komplexität der Kabelbäume ist es kaum noch möglich, mit vertretbarem Zeitaufwand den Verlauf eines jeden einzelnen Kabels zu verfolgen. Stattdessen wird der Ansatz verfolgt, dass jeder Stecker wie ein Schlüssel in den dazu korrespondierenden Steckkontakt passt. Um dieser großen Variantenvielfalt gerecht zu werden, ist entsprechend der Erfindung vorgesehen, dass an der mindestens einen Lautsprechereinheit mindestens eine Aufnahmebuchse vorhanden ist, innerhalb der mindestens ein Stehbolzen in Form eines Drahtstifts als elektrischer Kontakt vorhanden ist, wobei die mindestens eine Aufnahmebuchse mit einem Buchseneinsatz des Lautsprechersystems korrespondiert, der im Bereich des Stehbolzens eine Öffnung aufweist. Der Buchseneinsatz wirkt wie ein Schließzylinder, der in ein vorhandenes Schloss eingesetzt wird. Dabei weist die Öffnung in dem Buchsneinsatz eine Form auf, die zu dem elektrischen Steckkontakt in dem vorhandenen Kabelbaum korrespondiert. Durch die Trennung zwischen Buchseneinsatz und der Aufnahmebuchse können Buchseneinsätze mit großer Formenvielfalt günstig hergestellt werden und mit der Lautsprechereinheit verbunden werden. So kann für jeden Fahrzeugtyp, der eine vorbestimmte Steckerarchitektur aufweist, ein für den Fahrzeugtyp individualisierter Buchsenseinsatz ausgewählt werden.

Um den Buchseneinsatz möglichst kostengünstig und schnell mit der Aufnahmebuchse zu verbinden, kann in Ausgestaltung der Erfindung vorgesehen sein, dass der Buchseneinsatz mindestens einen Rastvorsprung aufweist, der mit je einer Rastöffnung in der mindestens einen Aufnahmebuchse korrespondiert. Zum Befestigen wird der Buchseneinsatz einmal in den Buchseneinsatz geschoben, wobei sich der aus Kunststoff bestehende Buchseneinsatz geringfügig elastisch verformt, bis der Rastvorsprung in die Rastöffnung eingreift und sich die Aufnahmebuchse elastisch zurückverformt.

Je nach Steckertyp kann es notwendig sein, dass die Ausrichtung des Buchseneinsatzes in einer bestimmten Richtung zur Lautsprechereinheit ausgerichtet ist. Dies ist insbesondere der Fall für Steckerleisten oder festen Mehrfachsteckern, die an die Form des Lautsprechers angepasst sind. Um die Ausrichtung des Buchseneinsatzes zu vereinheitlichen, kann es nach weiterer Ausgestaltung der Erfindung vorgesehen sein, dass auf der Innenseite der mindestens einen Aufnahmebuchse ein Führungsvorsprung oder eine Führungsnut vorhanden ist, welcher mit einer Führungsnut oder einem Führungsvorsprung auf der Außenseite des Buchseinsatzes korrespondiert.

Um eine Schmuckabdeckung oder eine Schutzabdeckung der empfindlichen Lautsprechermembran zur Verfügung zu stellen, kann es in einer weiteren Ausgestaltung der Erfindung vorgesehen sein, dass zwischen die Lautsprechereinheit und dem Überwurf ein Gitter einsetzbar ist, welches sich über die Fläche einer Lautsprechermembran der mindestens einen Lautsprechereinheit erstreckt. Das Gitter kann aus einzelnen Speichen bestehen, über das ein Textil gespannt ist. Es ist aber auch möglich, ein regelmäßiges oder gemustertes, in zwei Dimensionen perforiertes, Lochblech einzusetzen.

Das hier vorgestellte Lautsprechersystem kann einzeln aus Lautsprechereinheit, Montagevorrichtung als Überwurf und Buchseneinsätzen und gegebenenfalls auch dem Abdeckgitter vertrieben werden. Es ist aber auch möglich, höherwertigere Lautsprechersysteme als Set zu vertreiben, wobei dieses zusammengestellt wird aus der Lautsprechereinheit und mehr als einer Montagevorrichtung und / oder mehr als einem Buchseneinsatz zum Einbau in unterschiedliche Kraftfahrzeuge.

Die Erfindung wird anhand der folgenden Figuren näher erläutert. Es zeigt:
- Fig. 1: ein erfindungsgemäßes Lautsprechersystem in einer perspektivischen Ansicht von hinten, der dem Zuhörer abgewandten Seite,
- Fig. 2: ein erfindungsgemäßes Lautsprechersystem in einer perspektivischen Ansicht von vorne, der dem Zuhörer zugewandten Seite,
- Fig. 3.1: eine Montagevorrichtung als Überwurf aus dem erfindungsgemäßen Lautsprechersystem mit hervorgehobenem Detail A, B
- Fig. 3.2: Detail A aus Figur 3.1,
- Fig 3.3: Detail B mit der erfindungsgemäßen Ausführungsvariante der Montagevorrichtung im korrespondierenden Set,
- Fig. 4.1: in der ersten Reihe oben drei Ansichten auf einen Buchseneinsatz des erfindungsgemäßen Lautsprechersystems; in der zweiten Reihe unten drei Ansichten auf die Öffnung verschiedener Buchseneinsätze für verschiedene Steckkontakte,
- Fig. 4.2: eine Darstellung zur Verdeutlichung, wie der Buchseneinsatz gemäß Fig. 4.1 mit dem Lautsprechersystem vereint wird,
- Fig. 5: eine Darstellung zur Demonstration des Einsatzes eines Schutz- oder Schmuckgitters für die Membran der Lautsprechereinheit.

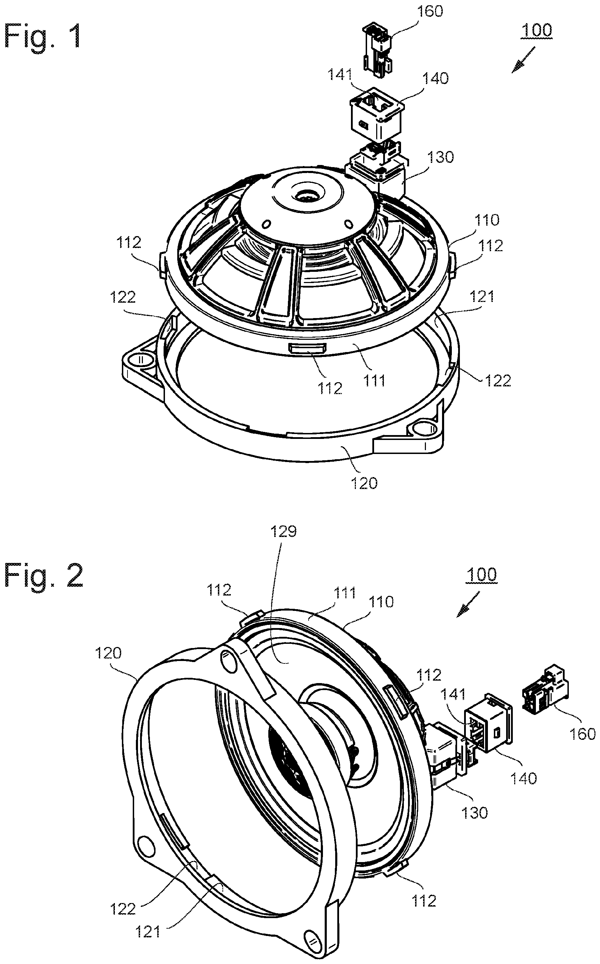

In **Figur 1** ist eine perspektivische Explosionsansicht auf ein erfindungsgemäßes Lautsprechersystem 100 in einer Darstellung von hinten, also der dem Zuhörer abgewandten Seite gezeigt. Das Lautsprechersystem 100 weist mindestens eine Lautsprechereinheit 110 auf. Es ist auch möglich, dass mehr als ein Lautsprecher konzentrisch und übereinander in einer Lautsprechereinheit 110 angeordnet ist oder auch, dass mehr als ein Lautsprecher in einer gemeinsamen Montagevorrichtung 120 aufgenommen ist. Des Weiteren weist das Lautsprechersystem 100 die mindestens eine Montagevorrichtung 120 auf. Die mindestens eine Lautsprechereinheit 110 ist mit der mindestens einen Montagevorrichtung 120 verbindbar. Nach der hier vorliegenden Ausgestaltung des Lautsprechersystems 100 ist eine Montagevorrichtung 120 als Überwurf ausgestaltet. Dieser Überwurf weist zur Innenseite 121 drei Senknuten 122 auf, welche mit Vorsprüngen 112 an der Außenseite 111 der hier gezeigten Lautsprechereinheit 110 korrespondieren, und zwar dann, wenn der Überwurf die mindestens eine Lautsprechereinheit 120 aufnimmt. Die zwei Senknuten 122 weisen jeweils etwa mittig einen tangentialen Versatz 123 auf, wobei im Weg des tangentialen Versatzes 123 ein Riegelvorsprung 124 vorhanden ist, welcher den Vorsprüngen 112, die an der Außenseite 111 der mindestens einen Lautsprechereinheit 110 angeordnet sind, bei der hier in dieser Ausführungsform bestimmungsgemäßen Verbindung einen Klemmsitz verleiht. Der Riegelvorsprung 124 ist in den folgenden Figuren näher erläutert.

Die hier gezeigte Variante des Lautsprechersystems 100 ist des Weiteren an der Lautsprechereinheit 110 mit einer Aufnahmebuchse 130 ausgestattet. In dieser Aufnahmebuchse 130 ist in der Öffnung mindestens ein Stehbolzen 131 in Form eines Drahtstifts als elektrischer Kontakt vorhanden. Je nach Art des Lautsprechers kann nur ein einzelner Kontakt vorhanden sein, der gegen Masse, einem metallischen Rahmen des Lautsprechers, arbeitet. Es ist aber auch möglich, massefreie Kontakte unterzubringen und für jeden einzelnen Lautsprecher der Lautsprechereinheit 110 je zwei elektrische Pole als Kontaktstifte anzuordnen. Die Aufnahmebuchse 130 korrespondiert mit einem Buchseneinsatz 140, der im Bereich des Stehbolzens 131 selbst eine Öffnung 141 freilässt. In diese Öffnung 141 passt ein korrespondierender Steckkontakt 160 eines Kabelbaums, wobei hier nur der Steckkontakt, nicht jedoch die Leitungen des Kabelbaums gezeigt sind.

In **Figur 2** ist zur Verdeutlichung sämtlicher Merkmale in Figur 1 das gleiche Lautsprechersystem 100 in einer perspektivischen Ansicht von vorne, also der dem Zuhörer zugewandten Seite in einer Explosionsdarstellung gezeigt. Die Figurenbeschreibung zu Figur 1 ist auch auf diese Figur 2 zu lesen.

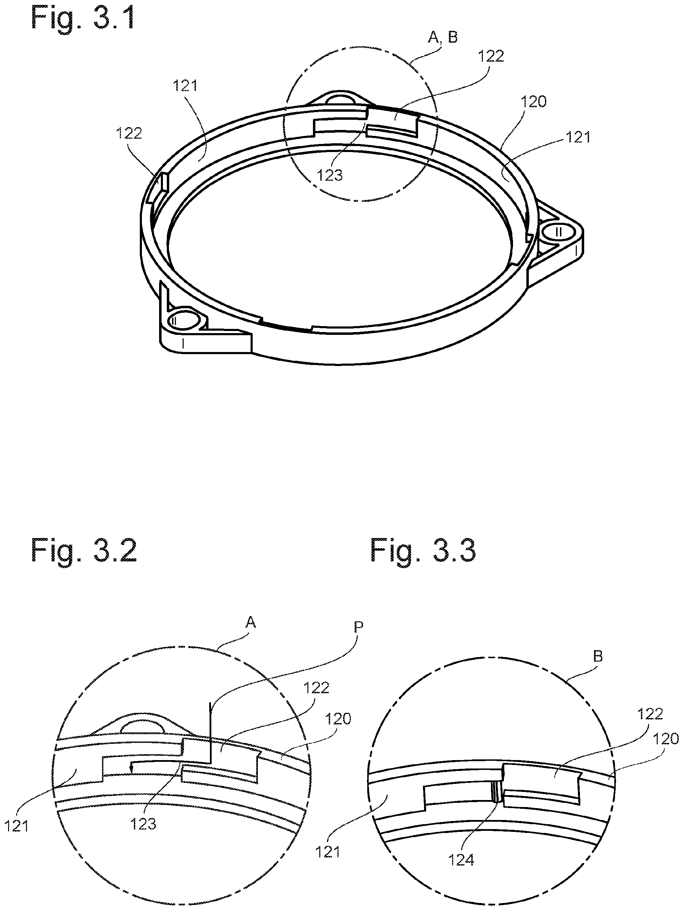

In **Figur 3****.****1** ist eine Montagevorrichtung 120 als Überwurf aus dem erfindungsgemäßen Lautsprechersystem 100 mit hervorgehobenem Detail A, B gezeigt. Die hier dargestellte Ansicht ist auf eine Senknut 122 zentriert, dem Detail A, B auf der Innenseite 121 der Montagevorrichtung 120. Die Senknut 122 ist zur hier oben liegenden Seite offen. In diese hier oben liegende Öffnung der Senknut 122 werden beim Verbinden mit der Lautsprechereinheit 110 die Vorsprünge 112 der Lautsprechereinheit 110 eingeschoben. Am Grund der ersten Stufe der Senknut 122 ist ein tangentialer Versatz 123 der Senknut 122 vorhanden. Ist ein Vorsprung 112 am Grund der ersten Stufe angelangt, so kann die Lautsprechereinheit 110 in der Montagevorrichtung 120 in Richtung des tangentialen Versatzes, der in der Ebene des Überwurfs liegt, gedreht werden. Der Weg eines Vorsprungs 112 an der Lautsprechereinheit 110 ist in Detail A in **Figur 3****.****2** hervorgehoben. Pfeil P zeigt den Weg eines Vorsprungs 112 an der Lautsprechereinheit 110 in der Senknut 122, der erst mit einer vertikalen Senkbewegung beginnt, sodann in einer tangentialen Richtung abbiegt und sodann wieder in vertikaler Richtung abwärts verläuft, wenn der Versatz 123 weit genug ist. Es ist auch möglich, dass der Versatz 123 nur so kurz ist, dass die zweite vertikale Abwärtsbewegung nicht stattfindet. Die hier gezeigte Ausführungsform ist so aufgebaut, dass die Senknuten 122 auf der Innenseite des Überwurfs angeordnet sind und dass die Vorsprünge 112 am äußeren Umfang der Lautsprechereinheit 110 angeordnet sind. Es ist nach dem Gedanken der Erfindung aber auch möglich, dass der Aufbau dazu invertiert vorliegt. So kann es vorgesehen sein, dass die Vorsprünge 112 auf der Innenseite des Überwurfs angeordnet sind und die Senknuten 122 auf der der Außenseite 111 der mindestens einen Lautsprechereinheit 110 angeordnet sind.

In **Figur 3.3** ist nun ein erfindungsgemäßes Detail in Detail B gezeigt. Die Senknut 122 weist einen Riegelvorsprung 124 auf. Es ist je nach Länge des Versatzes 123 möglich, dass der Riegelvorsprung 124 zu einem Klemmsitz eines Vorsprungs 112 an der Lautsprechereinheit 110 führt, womit die Lautsprechereinheit fixiert ist. Es ist bei einem längeren Versatz 123 aber auch möglich, dass ein Vorsprung 112 an der Lautsprechereinheit 110 über diesen Riegelvorsprung 124 hinweggeschoben wird und in dem Versatz 123 gefangen ist.

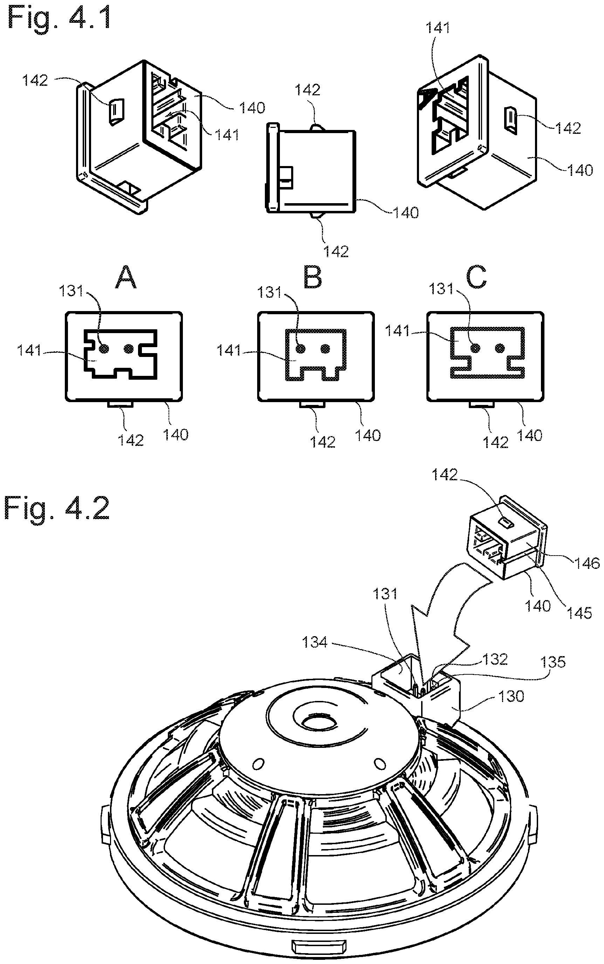

In **Figur 4****.****1** sind in der ersten Reihe oben drei Ansichten auf einen Buchseneinsatz 140 des erfindungsgemäßen Lautsprechersystems 100 dargestellt; in der zweiten Reihe unten sind drei Ansichten auf die Öffnung verschiedener Buchseneinsätze 140 für verschiedene Steckkontakte 160 gezeigt. Die Buchseneinsätze 140 verhalten sich ähnlich wie Schließzylinder in einem Schloss. Die Buchseneinsätze 140 weisen hierzu selbst verschieden geformte Öffnungen 141 auf, die mit der Form eines beispielsweise für einen Fahrzeugtyp speziellen Steckkontaktes 160 einen Formschluss ausbilden und mit diesem Steckkontakt 160 korrespondieren. Um den Buchseneinsatz 140 in einer Aufnahmebuchse 130 an der Lautsprechereinheit 110 zu befestigen, können an der Außenseite des Buchseneinsatzes 140 ein oder mehrere Rastvorsprünge 142 vorhanden sein, die jeweils in eine entsprechende Rastöffnung 132 der Aufnahmebuchse 132 eingreifen. Die steckkontakttypische Öffnung 142 lässt Raum für in der Aufnahmebuchse 130 vorhandenen Stehbolzen 131, die in Form eines Drahtstiftes am Boden der Aufnahmebuchse 130 vorhanden sind.

In **Figur 4****.****2** ist zur Verdeutlichung, wie der Buchseneinsatz 140 gemäß Fig. 4.1 mit der Lautsprechereinheit 110 vereint wird, die Lautsprechereinheit 110 dargestellt. Der breite Pfeil zeigt, wie ein Buchseneinsatz 140 in die Aufnahmebuchse 130 eingesetzt wird. In dieser Darstellung weist der Buchseneinsatz 140 auf der Außenseite eine Führungsnut 145 auf, welche mit einem Führungsvorsprung 135 auf der Innenseite der Aufnahmebuchse 130 zusammenwirkt, so dass der Buchseneinsatz 140 nur in einer Weise in der Aufnahmebuchse 130 eingesteckt werden kann.

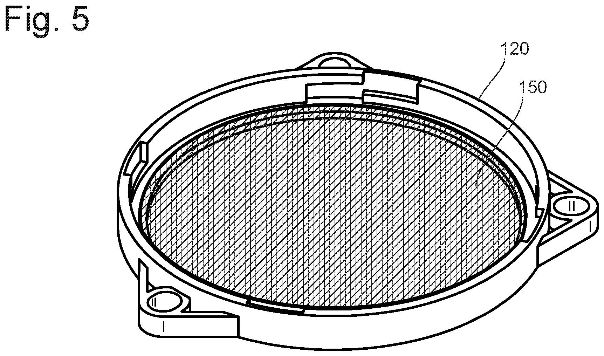

In **Figur 5** ist schließlich ein weiteres Detail gezeigt, um zu zeigen, wie ein Schutz- oder Schmuckgitter 150 für die Lautsprechermembran 129 der Lautsprechereinheit 110 in die Montagevorrichtung 120 eingelegt werden kann. Dabei wird das Schutz- oder Schmuckgitter 150 in die als Überwurf gestaltete Montagevorrichtung eingelegt und sodann die Lautsprechereinheit 110 in den Überwurf eingeschoben, so dass das Schutz- oder Schmuckgitter 150 zwischen Überwurf und Lautsprechereinheit 110 eingeklemmt ist.

**BEZUGSZEICHENLISTE**

| | | | |
|---|---|---|---|
| 100 | Lautsprechersystem | 135 | Führungsvorsprung |
| 110 | Lautsprechereinheit | | |
| 111 | Außenseite | 140 | Buchseneinsatz |
| 112 | Vorsprung | 141 | Öffnung |
| | | 142 | Rastvorsprung |
| 120 | Montagevorrichtung | 145 | Führungsnut |
| 121 | Innenseite | 146 | Außenseite |
| 122 | Senknut | | |
| 123 | Versatz | 150 | Gitter |
| 124 | Riegelvorsprung | | |
| 129 | Lautsprechermembran | 160 | Steckkontakt |
| 130 | Aufnahmebuchse | A | Detail |
| 131 | Stehbolzen | B | Detail |
| 132 | Rastöffnung | P | Pfeil |
| 134 | Innenseite | | |

## Patentansprüche

1. Lautsprechersystem (100), aufweisend
- mindestens eine Lautsprechereinheit (110),
- mindestens eine Montagevorrichtung (120),
wobei die mindestens eine Lautsprechereinheit (110) mit der mindestens einen Montagevorrichtung (120) verbindbar ist, wobei
die mindestens eine Montagevorrichtung (120) als Überwurf ausgestaltet ist, der zur Innenseite (121) mindestens zwei Senknuten (122) aufweist, welche mit Vorsprüngen (112) an der Außenseite (111) der mindestens einen Lautsprechereinheit (110) korrespondieren, wenn der Überwurf die mindestens eine Lautsprechereinheit (120) aufnimmt,
**dadurch gekennzeichnet, dass**
die mindestens zwei Senknuten (122) jeweils etwa mittig einen tangentialen Versatz (123) aufweisen, wobei im Weg des tangentialen Versatzes (123) ein Riegelvorsprung (124) vorhanden ist, welcher den Vorsprüngen (112) an der Außenseite (111) der mindestens einen Lautsprechereinheit (110) einen Klemmsitz verleiht, und wobei
an der mindestens einen Lautsprechereinheit (110) mindestens eine Aufnahmebuchse (130) vorhanden ist, innerhalb der mindestens ein Stehbolzen (131) in Form eines Drahtstifts als elektrischer Kontakt vorhanden ist, wobei die mindestens eine Aufnahmebuchse (130) mit einem Buchseneinsatz (140) des Lautsprechersytems korrespondiert, der im Bereich des Stehbolzens (131) eine Öffnung (141) aufweist.

2. Lautsprechersystem nach Anspruch 1,
**dadurch gekennzeichnet, dass**
die mindestens eine Lautsprechereinheit (110) und die mindestens eine Montagevorrichtung (120) im Bereich des Überwurfs kreisrund ausgeführt sind.

3. Lautsprechersystem nach Anspruch 1 oder 2,
**dadurch gekennzeichnet, dass**
die mindestens eine Montagevorrichtung (120) mit der mindestens einen Lautsprechereinheit (110) vorwärts als auch rückwärts verbindbar ist.

4. Lautsprechersystem nach einem der Ansprüche 1 bis 3,
**dadurch gekennzeichnet, dass**
der tangentiale Versatz (123) so lang ist, dass die Vorsprünge (112) an der Außenseite (111) der mindestens einen Lautsprechereinheit (110) über den Riegelvorsprung (124) hinweg bewegbar sind.

5. Lautsprechersystem nach Anspruch 4,
**dadurch gekennzeichnet, dass**
der Buchseneinsatz (140) mindestens einen Rastvorsprung (142) aufweist, der mit je einer Rastöffnung (132) in der mindestens einen Aufnahmebuchse (130) korrespondiert.

6. Lautsprechersystem nach Anspruch 5,
**dadurch gekennzeichnet, dass**
auf der Innenseite (134) der mindestens einen Aufnahmebuchse (130) ein Führungsvorsprung (135) oder eine Führungsnut vorhanden ist, welcher mit einer Führungsnut (145) oder einem Führungsvorsprung auf der Außenseite (146) des Buchseinsatzes (140) korrespondiert.

7. Lautsprechersystem nach einem der Ansprüche 1 bis 6,
**dadurch gekennzeichnet, dass**
zwischen der mindestens einen Lautsprechereinheit (110) und der mindestens einen Montagevorrichtung (120) ein Gitter (150) einsetzbar ist, welches sich über die Fläche einer Lautsprechermembran (129) der mindestens einen Lautsprechereinheit (110) erstreckt.

8. Lautsprechersystem nach einem der Ansprüche 1 bis 7,
**dadurch gekennzeichnet, dass**
die Vorsprünge (112) auf der Innenseite des Überwurfs angeordnet sind und die Senknuten (122) auf der der Außenseite (111) der mindestens einen Lautsprechereinheit (110) angeordnet sind.

9. Lautsprechersystem-Set, aufweisend,
mindestens ein Lautsprechersystem nach den Ansprüchen 1 bis 6, und
mindestens zwei auf der Außenseite unterschiedlich geformte Montagevorrichtungen.

10. Lautsprechersystem-Set, aufweisend,
mindestens ein Lautsprechersystem nach den Ansprüchen 5 bis 6, und
mindestens zwei Buchseneinsätze, die jeweils eine voneinander unterschiedliche Innenform der Öffnung aufweisen.

## Claims

1. A loudspeaker system (100), comprising
- at least one loudspeaker unit (110),
- at least one mounting device (120),
wherein the at least one loudspeaker unit (110) can be connected to the at least one mounting device (120), wherein
the at least one mounting device (120) is designed in the form of a collar that has at least two sunken grooves (122) toward the inside (121), and wherein said sunken grooves correspond to projections (112) on the outside (111) of the at least one loudspeaker unit (110) when the collar receives the at least one loudspeaker unit (120),
**characterized in that**
the at least two sunken grooves (122) respectively have a tangential offset (123) about centrally, wherein a locking projection (124) is arranged in the path of the tangential offset (123) and provides a clamping seat for the projections (112) on the outside (111) of the at least one loudspeaker unit (110), wherein
at least one receptacle socket (130) is provided on the at least one loudspeaker unit (110), within which receptacle socket at least one stud bolt (131) in the form of a wire pin is provided as an electrical contact, and wherein the at least one receptacle socket (130) corresponds to a socket insert (140) of the loudspeaker system having an opening (141) in the region of the stud bolt (131).

2. The loudspeaker system according to claim 1,
**characterized in that**
the at least one loudspeaker unit (110) and the at least one mounting device (120) are circular in the region of the collar.

3. The loudspeaker system according to claim 1 or 2,
**characterized in that**
the at least one mounting device (120) can be connected to the at least one loudspeaker unit (110) in a forward direction, as well as in a rearward direction.

4. The loudspeaker system according to one of claims 1 to 3, **characterized in that**
the tangential offset (123) is sufficiently long for allowing the projections (112) on the outside (111) of the at least one loudspeaker unit (110) to move over the locking projection (124).

5. The loudspeaker system according to claim 4,
**characterized in that**
the socket insert (140) has at least one snap-in projection (142) that corresponds to a respective snap-in opening (132) in the at least one receptacle socket (130).

6. The loudspeaker system according to claim 5,
**characterized in that**
a guide projection (135) or a guide groove corresponding to a guide groove (145) or a guide projection on the outside (146) of the socket insert (140) is provided on the inside (134) of the at least one receptacle socket (130).

7. The loudspeaker system according to one of claims 1 to 6, **characterized in that**
a grille (150) extending over the surface of a loudspeaker membrane (129) of the at least one loudspeaker unit (110) can be inserted between the at least one loudspeaker unit (110) and the at least one mounting device (120).

8. The loudspeaker system according to one of claims 1 to 7, **characterized in that**
the projections (112) are arranged on the inside of the collar and the sunken grooves (122) are arranged on the outside (111) of the at least one loudspeaker unit (110).

9. A loudspeaker system set, comprising
at least one loudspeaker system according to claims 1 to 6 and at least two mounting devices that are shaped differently on the outside.

10. A loudspeaker system set, comprising
at least one loudspeaker system according to claims 5 to 6 and at least two socket inserts with respectively different internal shapes of the opening.

## Revendications

1. Système de haut-parleurs (100), comportant
- au moins une unité de haut-parleurs (110),
- au moins un dispositif de montage (120),
l'au moins une unité de haut-parleurs (110) étant susceptible d'être assemblée avec l'au moins un dispositif de montage (120),
l'au moins un dispositif de montage (120) étant conçu sous la forme d'un moraillon, qui comporte vers la face intérieure (121) au moins deux rainures abaissées (122), lesquelles correspondent avec des saillies (112) sur la face extérieure (111) de l'au moins une unité de haut-parleurs (110), lorsque le moraillon reçoit l'au moins une unité de haut-parleurs (120),
**caractérisé en ce que**
les au moins deux rainures abaissées (122) comportent chacune approximativement en leur centre un décalage (123) tangentiel, dans le trajet du décalage (123) tangentielle étant présente une saillie de verrouillage (124), laquelle confère aux saillies (112) sur la face extérieure (111) de l'au moins une unité de haut-parleurs (110) un ajustement serré et
sur l'au moins une unité de haut-parleurs (110) étant présente au moins une douille de réception (130), à l'intérieur de laquelle est présent au moins un goujon (131) sous la forme d'une pointe en fil métallique, faisant office de contact électrique, l'au moins une douille de réception (130) correspondant à un embout de douille (140) du système de haut-parleurs, qui dans la zone du goujon (131) comporte un orifice (141).

2. Système de haut-parleurs 1,
**caractérisé en ce que**
l'au moins une unité de haut-parleurs (110) et l'au moins une dispositif de montage (120) sont réalisés de forme circulaire dans la zone du moraillon.

3. Système de haut-parleurs selon la revendication 1 ou 2,
**caractérisé en ce que**
l'au moins un dispositif de montage (120) est susceptible d'être assemblé aussi bien vers l'avant que vers l'arrière avec l'au moins une unité de haut-parleurs (110).

4. Système de haut-parleurs selon l'une quelconque des revendications 1 à 3, **caractérisé en ce que**
le décalage (123) tangentiel est d'une longueur telle, que les saillies (112) sur la face extérieure (111) de l'au moins une unité de haut-parleurs (110) soient déplaçables au-delà de la saillie de verrouillage (124).

5. Système de haut-parleurs selon la revendication 4,
**caractérisé en ce que**
l'embout de douille (140) comporte au moins une saillie d'enclenchement (142) qui correspond avec un orifice d'enclenchement (132) dans l'au moins une douille de réception (130).

6. Système de haut-parleurs selon la revendication 5,
**caractérisé en ce que**
sur la face intérieure (134) de l'au moins une douille de réception (130) est présente une saillie de guidage (135) ou une rainure de guidage, laquelle correspond avec une rainure de guidage (145) ou une saillie de guidage sur la face extérieure (146) de l'embout de douille (140).

7. Système de haut-parleurs selon l'une quelconque des revendications 1 à 6,
**caractérisé en ce**
**qu'**entre l'au moins une unité de haut-parleurs (110) et l'au moins un dispositif de montage (120) est insérable une grille (150), laquelle s'étend sur la surface d'une membrane (129) de haut-parleurs de l'au moins une unité de haut-parleurs (110).

8. Système de haut-parleurs selon l'une quelconque des revendications 1 à 7,
**caractérisé en ce que**
les saillies (112) sont placées sur la face intérieure du moraillon et les rainures abaissées (122) sont placées sur la face extérieure (111) de l'au moins une unité de haut-parleurs (110).

9. Kit de système de haut-parleurs, comportant
au moins un système de haut-parleurs selon les revendications 1 à 6 et
au moins deux dispositifs de montage façonnés différemment sur la face extérieure.

10. Kit de système de haut-parleurs, comportant
au moins un système de haut-parleurs selon les revendications 5 à 6 et au moins deux embouts de douille, qui comportent chacun un orifice de forme intérieure différente.
